# EUROPÄISCHE PATENTANMELDUNG

(11) **EP 0 762 053 A2**
(43) Veröffentlichungstag der Anmeldung: **12.03.1997**
(21) Anmeldenummer: 96108836.6
(22) Anmeldetag: 01.06.1996
(51) Int. Cl.: F23G 5/027

(54) **Anlage zum Verschwelen und anschliessenden Verbrennen von Abfallstoffen und toxischen Reststoffen**

(30) Priorität: 22.08.1995 DE 19530732
(71) Anmelder: MAN Gutehoffnungshütte Aktiengesellschaft, 46145 Oberhausen (DE)
(72) Erfinder: Vollhardt, Frohmut, Dipl.-Ing., 46149 Oberhausen (DE)

(57) **Zusammenfassung**

Die Erfindung betrifft eine Anlage zum Verschwelen und zum anschließenden Verbrennen von Abfallstoffen und toxischen Reststoffen mit einer Schweltrommel mit Austragsvorrichtung, einer Brennkammer (1), einer Nachbrennkammer (8), einem Abhitzekessel (13) und einem Luftvorwärmer (16).

Bei dieser Anlage ist die Brennkammer (1) in die Nachbrennkammer (8) eingelassen. Beide Kammern besitzen einen gemeinsamen Schlackenabfluß (12). Im untersten Bereich der Nachbrennkammer (8) sind zusätzliche Schmelzfluß-Sicherungsbrenner (26) angeordnet.

Die Brennkammer (1) weist kreisförmig angeordnete Kesselrohrwände (5) mit jeweils einem oberen und einem unteren Sammler (4, 5) auf. Sowohl die Kesselrohrwände (5) als auch die beiden Wände (9, 10) der Nachbrennkammer (8) sind mit Feuerfest-Material ausgekleidet.

Die erste Kesselrohrwand (5) des Abhitzekessels (13) ist parallel zur kreisförmigen Wand (10) der Nachbrennkammer (8) angeordnet.

An dem verkürzten Abhitzekessel (13) schließt sich ein Luftvorwärmer (16) an der mit Keramik- bzw. Glas-Kühlsegmenten zum Abkühlen der Rauchgase auf 120 ° C ausgerüstet ist.

## Beschreibung

Die Erfindung betrifft eine Anlage zum Verschwelen und anschließenden Verbrennen von Abfallstoffen und toxischen Reststoffen mit einer Schweltrommel mit Austragsvorrichtung, einer Brennkammer, einer Nachbrennkammer, einem Abhitzekessel und einem Luftvorwärmer.

Bei Brennkammern des sogenannten Pyro-Schmelz-Verfahrens bzw. des Schwel-Brenn-Verfahrens ist eine Nachbrennkammer erforderlich, die den Kohlenstoff aus den festen Reststoffen der Verschwelung (Pyrolyse) endgültig verbrennt.

Da die Verbrennungstemperatur für die festen Reststoffe und Rauchgase in der Brennkammer über dem Schlackenschmelzpunkt liegen muß, sind Verbrennungstemperaturen von über 1200 °C, in der Spitze bis 1400 °C, erforderlich.

Aus der DE 38 04 853 ist eine Anlage zum Verschwelen von Abfallstoffen mit einer Schwelvorrichtung und einer Nachbrennkammer mit Wärmetauscher bekannt. In der Nachbrennkammer werden u.a. die schadstoffbeladenen Brennergase der Schwelvorrichtung verbrannt. Diese Gase verweilen dort bei einer Temperatur von 1200 °C oder darüber über einen Zeitraum von 1,0 - 5,0 Sekunden, so daß während dieser Zeit eine Umwandlung in ein Gas mit geringem Schadstoffgehalt erfolgen kann.

Die dem Gas der Nachbrennkammer entzogene Wärme kommt dem Schwelvorgang dadurch zugute, daß das die Schwelvorrichtung beheizende Gas im Wärmetauscher der Nachbrennkammer erwärmt wird und dies im geschlossenen Kreislauf zwischen der Schwelvorrichtung und dem Wärmetauscher der Nachbrennkammer erfolgt, so daß eine Korrosion in den Teilen dieses Kreislaufs vermieden wird.

Aus der DE 41 03 605 ist ein Verfahren und Einrichtung zum Heizen einer Schweltrommel, insbesondere einer Schweltrommel für das Schwel-Brenn-Verfahren bekannt. Dabei wird in einem Wärmetauscher erwärmtes Heizgas in einem Heizgaskreislauf der Schweltrommel zugeführt. Es ist vorgesehen, daß zur Regelung der Energiezufuhr in die Schweltrommel das Heizgas ganz oder teilweise über eine Bypassleitung, in der sich eine Wärmesenke, beispielsweise ein Dampferzeuger oder Zusatzwärmetauscher, befindet, an der Schweltrommel vorbei dem Wärmetauscher wieder zugeführt wird. Außerdem ist vorgesehen, daß das Heizgas teilweise über eine Wärmesenke, die ein Zusatzwärmetauscher sein kann, der Schweltrommel zugeführt werden kann. Eine Verteilung des Heizgases auf maximal drei Wege ist durch eine Anordnung von Leitungen und Regelorganen gewährleistet.

Aus der bisher unveröffentlichten DE 44 46 745.1 ist eine Anlage zum Verschwelen von Abfallstoffen und verunreinigten Stoffen unter Luftabschluß bekannt, bei der nach der Austragsvorrichtung der Schweltrommel eine Brenneinrichtung mit Treppenrost, eine keramisch ausgemauerte Schmelzkammer mit Naßentschlacker sowie eine Nachbrennkammer angeordnet ist.- Unterhalb des Treppenrostes befindet sich eine Brecheinrichtung.-Die ausgebrannten ungereinigten Rauchgase werden zur Abkühlung einem Abhitzkessel zugeführt und verlassen diesen mit einer Temperatur von ca.160 °C, bevor sie einer Rauchgasreinigung zugeführt werden.

Es ist darüber hinaus bekannt, in den hinteren Teil eines Abhitzekessels zusätzlich einen Luftvorwärmer für die Erwärmung der Luft auf ca. 300 °C für die Brenner einer Nachbrennkammer anzuordnen. Die Rauchgase verlassen den Luftvorwärmer mit einer Temperatur von 160 °C.

Nachteilig ist bei den bekannten Anlagen die Anordnung von Brennkammer und Nachbrennkammer hintereinander, die dadurch einen großen Platzbedarf und höhere Konstruktionsgewichte erfordert. Ferner sind Rauchgasaustrittstemperaturen um 160 °C aus dem Abhitzekessel bzw. dem Luftvorwärmer bei stark CKW-haltigen Rauchgasen wegen der Unterschreitung des kritischen Taupunktes sehr schädlich, da bei Temperaturen unterhalb des Taupunktes eine verstärkte Korrosion der metallischen Bauteile durch Abscheidung von Chlor-Kohlen-Wasserstoffen erfolgt.

Aufgabe der Erfindung ist es, die einer Schwelanlage nachgeschaltete Brennkammer mit anschließender Nachbrennkammer dahingehend zu optimieren, daß extrem hohe Brenntemperaturen bis 1400 °C und möglichst lange Verweilzeiten der Rauchgase in der Nachbrennkammer erreicht werden und daß CKW-haltige Rauchgase unterhalb des Taupunktes abgekühlt werden, ohne daß eine erhöhte Korrosion an den Kühlrohren des Luftvorwärmers eintritt.

Die Lösung der Aufgabe geht aus den kennzeichnenden Merkmalen von Anspruch 1 hervor. Die Unteransprüche beschreiben vorteilhafte Ausgestaltungen der Erfindung.

Erfindungsgemäß wird die Brennkammer als an einen Kesselkreislauf angeschlossenes Aggregat ausgeführt und die Nachbrennkammer um die Brennkammer herum mit einem gemeinsamen Schlackenabfluß angeordnet. Die Vorwärmung der Verbrennungsluft für die Brennkammer erfolgt in einem mit Keramik- bzw. Glasrohren ausgestatteten Luftvorwärmer. Bei dieser raumsparenden Anordnung ist es möglich, die Schlacke aus der Brennkammer und auch aus der Nachbrennkammer gemeinsam abfließen zu lassen.

Die Nachbrennkammer in runder Ausführung wird um die ebenfalls runde Brennkammer angeordnet. Diese konstruktive Gestaltung ist raumsparend und hat den Vorteil, daß die Abstrahlungsverluste auch bei hohen Temperaturen auf ein Minimum beschränkt werden. Außerdem gibt es bei einer derartigen Ausführung keine Dehnungsprobleme.

Die Brennkammer mit in der Abdeckung angeordnetem Brennerkopf wird somit als unten offenes Aggregat in eine Nachbrennkammer mit einer äußeren und einer inneren Wand eingelassen, wobei ein Teil der inneren Wand direkt der ersten Kesselrohrwand des Abhitzekessels gegenüber angeordnet wird.

Brennkammer und Nachbrennkammer werden bevorzugt als runde Großbehälter konstruiert. Quadratische oder rechteckige Formen sind grundsätzlich ausführbar.

Bei runder Ausführung werden sowohl die wassergekühlten als auch die nur mit Feuerfest-Material zugestellten Wandelemente als kreisförmige Segmente ausgeführt. Dies gilt auch für die erste Kesselrohrwand des Abhitzekessels.

Die in die Nachbrennkammer eingebaute Brennkammer wird in bekannter Weise mit kreisförmigen Segmenten aus geschweißten Kesselrohren mit einem oberen und einem unteren Sammler ausgerüstet, wobei Kesselrohre und Sammler zusätzlich mit einer Feuerfest-Masse ausgekleidet werden, um der Verbrennungstemperatur von 1300 - 1400 °C gewachsen zu sein.

Anstelle durchgehender Sammler können auch solche Sammler verwendet werden, die in Einzelabschnitte unterteilt sind.

Die Wände der äußeren Nachbrennkammer können in ungekühlter Form ausgeführt und ebenfalls mit Feuerfest-Material ausgekleidet werden.

Im untersten Bereich der Nachbrennkammer werden zweckmäßigerweise Schmelzfluß-Sicherungsbrenner angeordnet. Mit Hilfe dieser Brenner soll gewährleistet werden, daß die Schlacke jederzeit in fließfähigem Zustand gehalten wird. Auch können mit Hilfe der Brenner Schlackeanbackungen an der Wandung gelöst werden.

Die erste Kesselrohrwand des Abhitzekessels wird ebenfalls kreisförmig ausgeführt, während die weiteren Kesselrohrwände des Abhitzekessels in gerader Ausführung, jeweils mit oberem und unterem Sammler, hergestellt werden.

Grundsätzlich kann auch daran gedacht werden, den gesamten Umfang der Nachbrennkammer in Gestalt von Kesselrohren auszuführen.

Ferner ist es denkbar, nur den gesamten oberen Teil der Nachbrennkammer mit Kesselrohren zu bestücken und somit diesen Bereich mit dem Abhitzekessel zu vereinen.

Die unteren Sammler der Brennkammer und des Abhitzekessels werden durch eine gemeinsame Kesselspeisewasser-Zuführleitung mit Speisewasser versorgt.

Die oberen Sammler der Brennkammer und des Abhitzekessels sind an eine gemeinsame Sattdampfleitung angeschlossen und mit einer Dampftrommel verbunden.

Der Luftvorwärmer, der mit Keramik- bzw. Glasrohren ausgerüstet ist, wird an den verkürzten Abhitzekesel angeschlossen. In den Luftvorwärmer strömen die Rauchgase mit einer Temperatur von 300 - 400 °C und verlassen diesen mit einer Endtemperatur von etwa 120 °C. Die vorgewärmte Verbrennungsluft wird dem Brennerkopf der Hochtemperatur-Brennkammer zugeführt. Durch den Brennerkopf werden in bekannter Weise zusätzlich Pyrolysegase, feste Pyrolyse-Reststoffe sowie Zusatzbrennstoffe und/oder Sauerstoff, falls erforderlich, zugeführt.

Anstelle eines Luftvorwärmers mit Keramik- bzw. Glas-Kühlrohren kann ein Luftvorwärmer angeordnet werden, der in zwei Abteilungen aufgegliedert ist. Die erste Abteilung enthält Kühlrohre aus Stahl und die zweite Abteilung Keramik- bzw. Glas-Kühlrohre.

Auch kann zwischen beiden Abteilungen des Luftvorwärmers ein Elektrofilter angeordnet werden oder eine andere geeignete Filtereinrichtung.

Ein Ausführungsbeispiel der Erfindung wird anhand von schematischen Zeichnungen näher erläutert.

Es zeigen:
- Fig. 1: einen Längsschnitt durch die Verbrennungsanlage und
- Fig. 2: eine Draufsicht auf die Verbrennungsanlage.

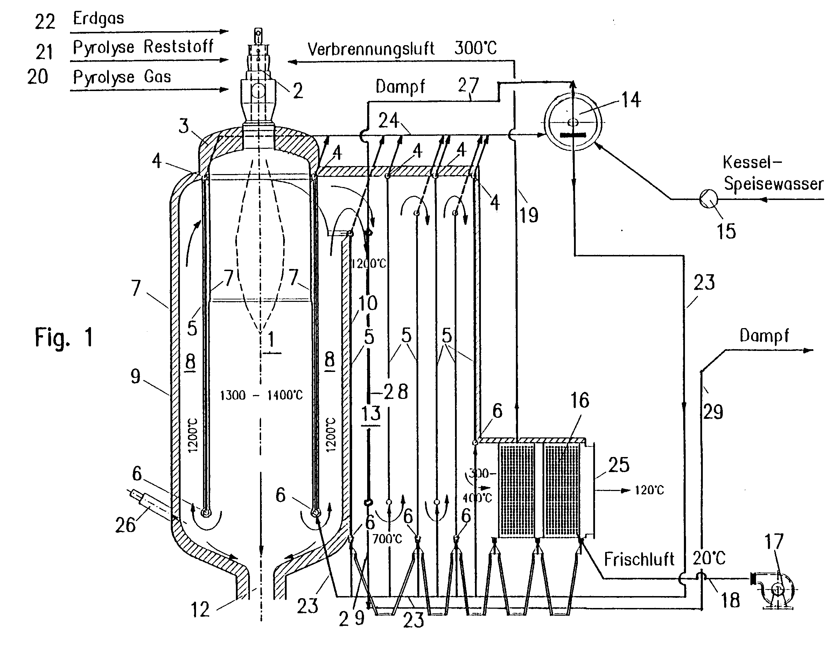

Fig. 1 zeigt die Brennkammer (1) und Nachbrennkammer (8). Im Ausführungsbeispiel handelt es sich um eine Brennkammer (1) mit Kreisquerschnitt, mit einem Brennerkopf (2) und einer Abdeckung (3). Diese Brennkammer (1) ist in eine Nachbrennkammer (8) mit Kreisquerschnitt eingesetzt. Brennkammer (1) und Nachbrennkammer (8) besitzen einen gemeinsamen Schlackenabfluß (12) am unteren Teil der Nachbrennkammer (8).

Die Brennkammer (1) weist kreisförmig angeordnete Kesselrohrwände (5) mit jeweils einem oberen (4) und einem unteren Sammler (6) auf, wobei sowohl die Kesselrohrwände (5) als auch die äußere (9) und innere Wand (10) der Nachbrennkammer (8) mit Feuerfest-Material (7) ausgekleidet sind.

Am unterenTeil der Nachbrennkammer (8) sind zusätzliche Schmelzfluß-Sicherungsbrenner angeordnet. Mit Hilfe dieser Brenner (8) soll die Schlacke fließfähig gehalten werden.

Die erste Kesselrohrwand (5) des Abhitzekessels (13) ist parallel zur kreisförmigen Wand (10) der Nachbrennkammer (8) angeordnet.

An den verkürzten Abhitzekessel (13) schließt sich ein Keramik- bzw. Glas-Luftvorwärmer (16) an, der mit Kühlsegmenten zum Abkühlen der Rauchgase auf 120 °C ausgerüstet ist.

Im Gegenstrom strömt aus einer Frischluftleitung (18) von einem Gebläse (17) angesaugte Frischluft durch den Keramik- bzw. Glas-Luftvorwärmer (16). Die auf ca.300 °C erwärmte Frischluft gelangt über eine Verbrennungsluft-Zuführleitung (19) zu dem Brennerkopf (2), an den ferner Zuführleitungen für Pyrolysegas (20), Pyrolyse-Reststoffe (21) sowie für Erdgas (22) oder andere Energieträger münden.

Die unteren Sammler (6) der Kesselrohrwände (5) der Brennkammer (1) und des Abhitzekessels (13) werden über eine Speisewasserpumpe (15) und die Leitung (23) mit Kesselspeisewasser aus der Dampftrommel (14) versorgt. Der Sattdampf wird aus den oberen Sammlern (4) über eine Leitung (24) der Dampftrommel (14) zugeführt.

Der Dampf aus der Dampftrommel (14) wird über eine Leitung (27) in den Abhitzekessel (13) geführt. In einem Überhitzerstrang (28), der innerhalb der ersten Kesselrohrwand (5) des Abhitzekessels (13) angeordnet ist, wird dieser Dampf überhitzt und verläßt den Abhitzekessel (13) über die Austrittsleitung (29), um zu einem (nicht dargestellten) Verbraucher geleitet zu werden.

Die Rauchgase werden in der Brennkammer (1) auf max. 1400 °C aufgeheizt, verweilen in der Nachbrennkammer (8) bei 1200 °C, kühlen im Abhitzekessel (13) bis auf ca. 300 ° ab, gelangen in den Luftvorwärmer (16) und verlassen diesen mit ca. 120 °C.

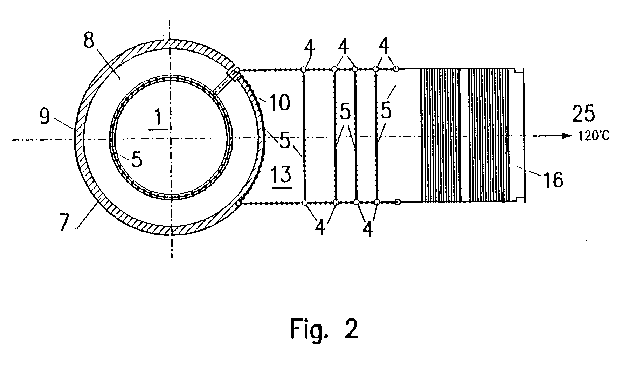

Fig. 2 zeigt eine Draufsicht auf die Kompaktanlage zur Behandlung der Rauchgase mit der aus gebogenen bzw. kreisförmigen Kesselrohrabschnitten (5) bestehenden Brennkammer (1), die von einer Nachbrennkammer (8) mit den Wänden (9, 10) umgeben ist.

Die Kesselrohrabschnitte (5) und die Wände (9, 10) sind jeweils mit Feuerfest-Material (7) gegen die Wärmestrahlung geschützt.

Die der Nachbrennkammer (8) zugewandte Kesselrohrwand (5) des Abhitzekessels (13) ist bogenförmig, die anderen Kesselrohrwände (5) sind gerade ausgeführt.

An den verkürzten Abhitzekessel (13) schließt sich ein Luftvorwärmer (16) mit Kühlelementen an, in welchem die Rauchgase auf 120 °C abgekühlt werden und am Rauchgasaustritt (25) in eine (nicht dargestellte) Rauchgas-Sammelleitung münden.

### Bezugsziffernliste:

- 1: Brennkammer
- 2: Brennerkopf von 1
- 3: Abdeckung von 1
- 4: Oberer Sammler
- 5: Kesselrohrwand
- 6: Unterer Sammler
- 7: ff-Material
- 8: Nachbrennkammer
- 9: Äußere Wand
- 10: Innere Wand
- 11: Sammler/Stutzen von 8
- 12: Schlackenabfluß von 8 und 1
- 13: Abhitzekessel
- 14: Dampftrommel
- 15: Speisewasserpumpe
- 16: Luftvorwärmer
- 17: Frischluftgebläse
- 18: Frischluft-Zuführleitung
- 19: Verbrennungsluft-Zuführleitung
- 20: Pyrolysegasleitung
- 21: Pyrolyse-Reststoffleitung
- 22: Kohlenstaub-Reststoffleitung
- 23: Kesselspeisewasser-Zuführleitung
- 24: Satt-Dampfleitung
- 25: Rauchgasaustritt
- 26: Schmelzfluß-Sicherungsbrenner
- 27: Dampfleitung zum Abhitzekessel
- 28: Überhitzerstrang
- 29: Austrittsleitung für überhitzten Dampf

## Patentansprüche

1. Anlage zum Verschwelen und zum anschließenden Verbrennen von Abfallstoffen und toxischen Reststoffen mit einer Schweltrommel mit Austragsvorrichtung, einer Brennkammer, einer Nachbrennkammer, einem Abhitzekesel und einem Luftvorwärmer,
dadurch gekennzeichnet,
daß im Anschluß an die Schweltrommel eine Brennkammer (1) mit Brennerkopf (2) und Abdeckung (3) in eine Nachbrennkammer (8) mit einer äußeren Wand (9) und einer inneren Wand (10) eingelassen ist,
daß ein Bereich der inneren Wand (10) der Brennkammer (8) unmittelbar an der ersten Rohrwand (5) des Abhitzekessels (13) angeordnet ist und daß unmittelbar an die letzte Rohrwand (5) des Abhitzekessels (13) ein Luftvorwärmer (16) angebaut ist.

2. Anlage nach Anspruch 1,
dadurch gekennzeichnet,
daß im untersten Bereich der Nachbrennkammer (8) Schmelzfluß-Sicherungsbrenner (26) angeordnet sind.

3. Anlage nach Anspruch 1,
dadurch gekennzeichnet,
daß die Brennkammer (1) aus einer kreisförmig angeordneten Kesselrohrwand (5) mit einem oberen (4) und einem unteren Sammler (6) besteht.

4. Anlage nach Anspruch 3,
dadurch gekennzeichnet,
daß beidseitig der Kesselrohrwand (5) und der Sammler (4, 6) Feuerfest-Material (7) aufgebracht ist.

5. Anlage nach Anspruch 1,
dadurch gekennzeichnet,
daß die Abdeckung (3) der Brennkammer (1), die äußere Wand (9), die innere Wand (10) und der Schlackenabfluß (12) der Nachbrennkammer (8) mit ff-Material (7) ausgekleidet sind.

6. Anlage nach Anspruch 1,
dadurch gekennzeichnet,
daß der Luftvorwärmer (16) mit Kühlsegmenten aus Keramik- bzw. Glasrohren ausgerüstet ist.

7. Anlage nach Anspruch 1,
dadurch gekennzeichnet,
daß der Luftvorwärmer (16) in zwei Abteilungen unterteilt ist, wobei die erste Abteilung mit stählernen Kühlrohren und die zweite Abteilung mit Keramik- bzw. Glas-Kühlrohren ausgerüstet ist.

8. Anlage nach Anspruch 7,
dadurch gekennzeichnet,
daß zwischen der ersten und der zweiten Abteilung des Luftvorwärmers ein Elektrofilter oder eine andere Filtereinrichtung angeordnet ist.

9. Anlage nach mindestens einem der Ansprüche 1 und 6 bis 8,
dadurch gekennzeichnet,
daß der Luftvorwärmer (16) über eine Frischluft-Zuführleitung (18) mit einem Gebläse (17) und über eine Verbrennungsluft-Zuführleitung (18) mit dem Brennerkopf (2) verbunden ist.

10. Anlage nach Anspruch 1,
dadurch gekennzeichnet,
daß der untere Sammler (6) der Brennkammer (1) und die unteren Sammler (4) des Abhitzekessels (13) über eine Kesselspeisewasser-Zuführleitung (23) mit einer Dampftrommel (14) verbunden sind.

11. Anlage nach Anspruch 1,
dadurch gekennzeichnet,
daß der obere Sammler (4) der Brennkammer (1) und die oberen Sammler (4) des Abhitzekessels (13) über eine Sattdampfleitung (24) mit einer Dampftrommel (14) verbunden sind.

12. Anlage nach den Ansprüchen 10 oder 11,
dadurch gekennzeichnet,
daß zwischen der Dampftrommel (14) und dem Abhitzekessels (13) eine Leitung (27) angeordnet ist, durch die Dampf aus der Dampftrommel (14) in einen Überhitzerstrang (28) innerhalb des ersten Zuges der Kesselrohrwand (5) geleitet wird, der als überhitzter Dampf bei (29) aus dem Abhitzekessel (13) austritt.
